**Europäisches Patentamt**

**European Patent Office**

**Office européen des brevets**

(11) Veröffentlichungsnummer: **0 189 198**
A2

# EUROPÄISCHE PATENTANMELDUNG

(21) Anmeldenummer: 86100869.6

(51) Int. Cl.⁴: **B 60 C 11/24**

(22) Anmeldetag: 23.01.86

(30) Priorität: 25.01.85 DE 3502482

(43) Veröffentlichungstag der Anmeldung: 30.07.86
Patentblatt 86/31

(84) Benannte Vertragsstaaten: AT BE CH DE FR GB IT LI LU NL SE

(71) Anmelder: Continental Gummi-Werke Aktiengesellschaft, Königsworther Platz 1, D-3000 Hannover 1 (DE)

(72) Erfinder: Trabandt, Hagen, Mozartstrasse 8, D-3163 Sehnde 1 (DE)

(54) Fahrzeugluftreifen mit Abnutzungsindikatoren.

(57) Die Erfindung geht von Fahrzeugluftreifen mit Abnutzungsindikatoren am Laufstreifen aus, der zickzackförmige oder wellenförmige Nuten aufweist. Um möglichst viele Indikatoren über den Reifenumfang verteilt anordnen zu können, die eigentliche Profilierung aber dadurch praktisch in ihrer Wirkung unbeeinflusst zu lassen, sind aufgrund der Erfindung die zu den Nuten hin vorspringenden Nutenränder ausgespart und zudem ist die Sohle der Aussparungen oberhalb des Nutengrundes angeordnet. Dabei können die Aussparungen von V-förmigen Kanten begrenzt sein.

ACTORUM AG

Continental Gummi-Werke AG, Hannover

1

**Fahrzeugluftreifen mit Abnutzungsindikatoren**

Die Erfindung betrifft einen Fahrzeugluftreifen mit Abnutzungsindikatoren am Laufstreifen, der zickzack- oder wellenförmige Nuten aufweist.

Es ist bekannt, Vertiefungen im Laufstreifen von Fahrzeugluftreifen mit Stufen in einer solchen Art zu versehen, daß hierdurch eine bestimmte Abnutzung des Luftreifens im Laufstreifenbereich erkennbar wird. Ist der Laufstreifen so weit abgenutzt, daß die Stufenflächen die Lauffläche bilden, so ist meist die zulässige Abnutzung erreicht. Dabei tritt eine gewisse Veränderung des Laufflächenbildes ein, und der Benutzer des Fahrzeuges wird dadurch auf die Abnutzung hingewiesen.

Bei den bekannten Fahrzeugluftreifen sind die Abnutzungsindikatoren mit relativ großem Abstand über den Umfang des Reifens verteilt angeordnet, und es liegt der Erfindung die Aufgabe zugrunde, die Anzahl der Indikatoren zu vergrößern, ohne dadurch Profilierungen in Kauf nehmen zu müssen, die aufgrund der Indikatoren nachteilig wären.

Zur Lösung dieser Aufgabe sind erfindungsgemäß die zu den Nuten hin vorspringenden Nutränder ausgespart und zudem ist die Sohle dieser Aussparungen oberhalb des Nutgrundes angeordnet. Zweckmäßigerweise werden dabei viereckige Aussparungen vorgesehen in der Weise, daß die erwähnten Nutränder kerbartig in dem Bereich ausgespart sind, der zu der Nut hin vorspringt.

Der Erfindung liegt somit der Gedanke zugrunde, das zickzack- oder wellenförmige Nutprofil so abzuändern, daß nicht etwa einige wenige Indikatoren vorgesehen sind, sondern die Indikatoren bzw. die dafür vorgesehenen Aussparungen selbst Bestandteil des Reifenprofils sind. Da in aller Regel die Teilungen der zickzack- oder wellenförmigen Nuten vergleichsweise klein sind, ergibt sich aufgrund der Erfindung für jede Profilteilung ein Abnutzungsindikator; wird der Laufstreifen abgenutzt und tritt die oberhalb des Nutgrundes gelegene Sohle der Aussparungen in die Lauffläche, so ist der Abnutzungsgrad ermittelt.

Weitere Einzelheiten der Erfindung werden anhand der Zeichnung erläutert, in der ein Ausführungsbeispiel der Erfindung dargestellt ist. Es zeigen:

Fig. 1 eine Teildraufsicht auf die Lauffläche eines Fahrzeugluftreifens,

Fig. 2 einen Schnitt nach der Linie II - II von Fig. 1,

Fig. 3 einen Schnitt nach der Linie III - III von Fig. 1 und

Fig. 4 und 5 je die in die Zeichenebene geklappten Seitenflächen der Nuten des Laufstreifens, wobei die Darstellung in den Fig. 4 und 5 aufgrund der Pfeilrichtung (Klapprichtung) IV und V gemäß Fig. 1 erfolgt ist.

Der Laufstreifen 1 des Fahrzeugluftreifens weist mehrere, vorzugsweise vier oder fünf Umfangsnuten 2 auf, die sich somit in Reifenumfangsrichtung, und zwar über den gesamten Umfang des Reifens erstrecken. Die Umfangsnuten 2 sind zickzackförmig gestaltet. Ihr Grund ist mit 3 bezeichnet und bei etwa V-förmigem Querschnitt steigen die Seitenflächen 4, welche die Umfangsnuten 2 begrenzen, steil jedoch schräg an. Die Seitenflächen 4 begrenzen je die Schenkel der nach links und nach rechts ansteigenden Abschnitte 5 und 6 der Umfangsnuten 2.

- 3 -

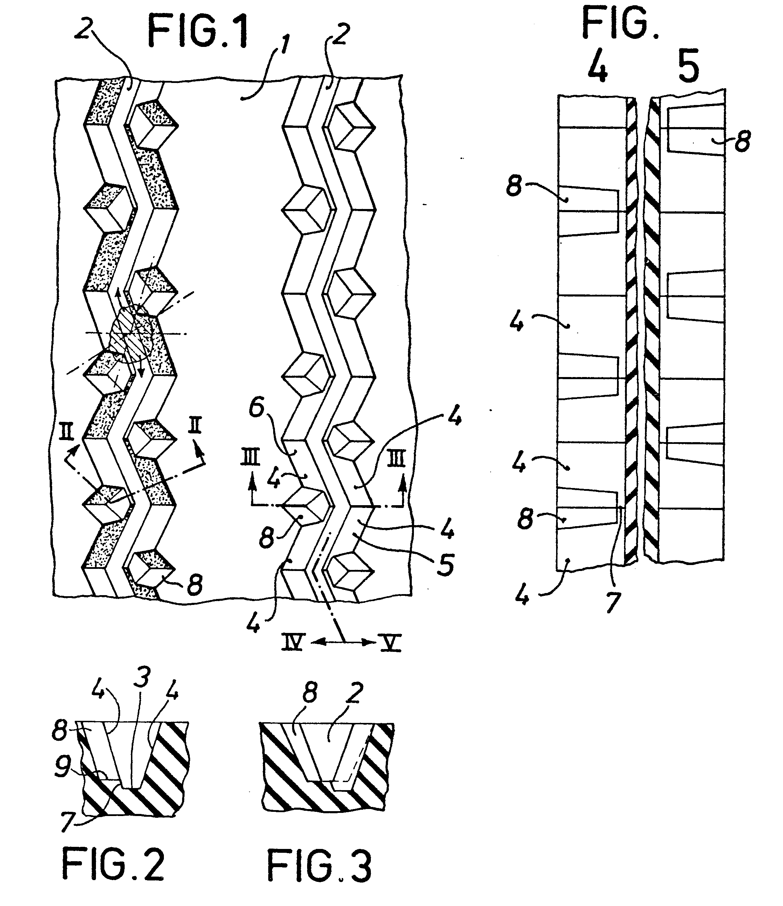

Durch den zickzackförmigen Verlauf der Umfangsnuten 2 stoßen die Abschnitte 5, 6 zusammen, und zwar in einer schräg ansteigenden Linie 7. Hier befinden sich jedoch Aussparungen 8, die gemäß Fig. 2 parallelogrammförmig gestaltet sind und deren Sohle 9 nahe oberhalb des Grundes 3 angeordnet ist. In der Draufsicht gemäß Fig. 1 sind Aussparungen 8 zu erkennen, die nach einem unregelmäßigen Viereck, und zwar im wesentlichen nach einem Parallelogramm gestaltet sind. Die an sich vorgesehenen Spitzen der Profilränder, die zu den Umfangsnuten 2 hin vorspringen, sind eingekerbt im Sinne der vorerwähnten Aussparungen 8.

Damit ergeben sich Indikatorflächen (Sohle 9), die sich über den gesamten Umfang des Reifens erstrecken. Zusätzlich tragen die Aussparungen 8 noch dazu bei, die Griffigkeit des Reifenprofils zu erhöhen. Dies ist immer dann der Fall, wenn sie - wie in der Zeichnung erkennbar - von V-förmigen Kanten begrenzt sind.

- 4 -

<u>Ansprüche</u>:

1. Fahrzeugluftreifen mit Abnutzungsindikatoren am Laufstreifen, der zickzackförmige oder wellenförmige Nuten aufweist, dadurch gekennzeichnet, daß die zu den Nuten (2) hin vorspringenden Nutränder ausgespart sind und die Sohle (9) der Aussparungen (8) oberhalb des Nutgrundes (3) angeordnet ist.

2. Fahrzeugluftreifen nach Anspruch 1, dadurch gekennzeichnet, daß die Aussparungen (8) von V-förmigen Kanten begrenzt sind.

3. Fahrzeugluftreifen nach Anspruch 1, dadurch gekennzeichnet, daß bei im wesentlichen V-förmigem Querschnitt der Nuten (2) die Aussparungen (8) praktisch parallelogrammförmig gestaltet sind, wobei eine kürzere Parallelogrammseite die Sohle (9) bildet und eine längere Parallelogrammseite der Nut (2) abgekehrt ist und parallel zu den die Nuten begrenzenden Flächen verläuft (Fig. 2).

Hannover, den 15. Januar 1985
D/Fr                85-8 P/D

# FIG.1

# FIG. 4 5

# FIG.2  FIG.3

Continental
Gummi-Werke A.G.
Hannover

85 - 8P